# EUROPÄISCHE PATENTANMELDUNG

(11) **EP 4 411 613 A1**
(43) Veröffentlichungstag der Anmeldung: **07.08.2024**
(21) Anmeldenummer: 23020059.4
(22) Anmeldetag: 01.02.2023
(51) Int. Cl.: G06Q 10/083

(54) **COMPUTERIMPLEMENTIERTES VERFAHREN ZUR PLANUNG UND ÜBERWACHUNG EINER KÜHLKETTE BEIM TRANSPORT VON TEMPERATUREMPFINDLICHEN WAREN**

(71) Anmelder: REP IP AG, 6300 Zug (CH)
(72) Erfinder: ROS, Nico, 4125 Riehen (CH); RETZKO, Stefan, 8037 Zürich (CH); WEGMANN, Christian, 2000 Neuchatel (CH)
(74) Vertreter: SONN Patentanwälte GmbH & Co KG

(57) **Zusammenfassung**

Computerimplementiertes Verfahren zur Planung und Überwachung einer Kühlkette beim Transport von temperaturempfindlichen Waren in einem temperaturkontrollierten Transportbehälter von einem Startort zu einem Zielort, umfassend
- Erstellen wenigstens einer Kombination von Routenabschnitten für wenigstens eine Transportroute vom Startort zum Zielort,
- Berechnen und Anzeigen eines erwarteten Verlaufs der Innentemperatur des Transportbehälters für die wenigstens eine Kombination von Routenabschnitten aus routenabschnittsspezifischen geschätzten Daten und behälterspezifischen Daten, wobei der erwartete Verlauf der Innentemperatur innerhalb eines vordefinierten Temperaturbereichs liegt,
- Aufzeichnen von routenabschnittsspezifischen tatsächlichen Daten während des Transports,
- Aktualisieren, während des Transports, der Berechnung des erwarteten Verlaufs der Innentemperatur des Transportbehälters für einen verbleibenden Teil der Transportroute unter Berücksichtigung der routenabschnittsspezifischen tatsächlichen Daten.

## Beschreibung

Die Erfindung betrifft ein computerimplementiertes Verfahren zur Planung und Überwachung einer Kühlkette beim Transport von temperaturempfindlichen Waren in einem temperaturkontrollierten Transportbehälter von einem Startzu einem Zielort.

Die Erfindung betrifft weiters ein Datenverarbeitungssystem und ein Computerprogrammprodukt zur Ausführung eines solchen Verfahrens.

Beim weltweiten Transport von temperaturempfindlichen Medikamenten, wie z.B. Impfstoffen, muss auf dem gesamten Transportweg vom Hersteller bis zum Patienten ein vorgeschriebener Temperaturbereich eingehalten werden. Die lückenlose Sicherstellung des Temperaturbereichs wird Kühlkette genannt. Die technische Umsetzung erfolgt durch aktive und/oder passive Kühlbehälter unterschiedlicher Größe für die einzelnen Routenabschnitte. Aktive Kühlbehälter arbeiten mit einem Kühlaggregat, welches zur Aufrechterhaltung der Temperatur auf eine durchgehende Stromversorgung angewiesen ist. Diese wird meist durch Batterien bereitgestellt, welche in die Kühlbehälter integriert sind. Passive Kühlbehälter arbeiten üblicherweise mit Latentwärmespeicherelementen. Diese werden vorgekühlt und durchlaufen während des Transports einen Phasenwechsel, wobei die von außen eindringende Wärme absorbiert wird.

Trotz der Verfügbarkeit geeigneter Kühltechnologien wird immer noch ein großer Anteil temperaturempfindlicher Medikamente, wie z.B. Impfstoffe, aufgrund von Temperaturabweichungen während des Transports unbrauchbar. Die Gründe hierfür sind oftmals mangelnde Planung, unvorhergesehene Ereignisse während des Transports oder Fehler bei der Handhabung der Kühlbehälter. Da die einzelnen Phasen temperaturgeführter Transporte typischerweise von unterschiedlichen Unternehmen ausgeführt werden, z.B. Phase 1: Transport mit dem Flugzeug in ein Zielland; Phase 2: Unterverteilung der Medikamente im Inland an Apotheken und Großhändler, ist es schwierig alle Prozesse zentral zu kontrollieren.

Zur Lösung dieser Problematik werden vermehrt Temperatur- und Standortsensoren eingesetzt, welche die Innentemperatur des Transportbehälters und die Umgebungstemperatur sowie die Position des Transportbehälters während des Transports aufzeichnen, wobei die Daten in computerimplementierten Systemen zusammengeführt und aufbereitet werden. Damit kann am Zielort nachgewiesen werden, dass die Medikamente zu keinem Zeitpunkt während des Transports außerhalb des vorgeschriebenen Temperaturbereichs lagen, oder im Falle einer Abweichung Ort und Zeitpunkt der Temperaturüberschreitung festgestellt und entsprechende Maßnahmen für zukünftige Lieferungen eingeleitet werden.

Außerdem gibt es Systeme zur Planung temperaturgeführter Transporte. Durch die Definition einer Lieferroute mit Angabe von Umgebungstemperaturen und Zeitspannen der einzelnen Routenabschnitte kann das thermische Verhalten unterschiedlicher Kühlbehälter berechnet und miteinander verglichen werden. Bei einigen Systemen ist es zudem möglich aktuelle Wetterdaten bei der Erstellung des Umgebungstemperaturprofils zu berücksichtigen. Systeme dieser Art, wie sie z.B. in der US 11,150,146 B1 beschrieben sind, ermöglichen es, vor einer Lieferung Entscheidungen über die besten Kühlbehälter, Transportrouten oder Lieferzeitpunkte zu treffen, um eine Temperaturabweichungen zu vermeiden oder um Kosten zu sparen.

Mit den existierenden computerimplementen Systemen ist es jedoch nicht möglich die Varianz der einzelnen Parameter, wie z.B. Transportzeiten, Umgebungstemperaturen und thermodynamische Eigenschaften der Kühlbehälter, zu berücksichtigen. Es wird lediglich ein Mittelwert oder eine Worst Case Annahme betrachtet. Außerdem ist es nicht möglich, einen Transport in Echtzeit zu überwachen und frühzeitig zu erkennen, ob im weiteren Verlauf des Transports eine Temperaturabweichung auftritt oder mit hoher Wahrscheinlichkeit zu erwarten ist.

Die Erfindung zielt daher darauf ab, ein Verfahren bereitzustellen, welches eine Planung und Echtzeitüberwachung von weltweiten Lieferungen von temperaturempfindlichen Medikamenten mit frühzeitiger Vorhersage einer Temperaturabweichung ermöglicht.

Zur Lösung dieser Aufgabe sieht die Erfindung gemäß einem ersten Aspekt ein computerimplementiertes Verfahren zur Planung und Überwachung einer Kühlkette beim Transport von temperaturempfindlichen Waren in einem temperaturkontrollierten Transportbehälter von einem Startzu einem Zielort vor, umfassend die Schritte:
a) Bereitstellen von Routenabschnitten wenigstens einer Transportroute, wobei wenigstens einem der Routenabschnitte wenigstens ein Transportmittel zugeordnet ist,
b) Bereitstellen von routenabschnittsspezifischen geschätzten Daten, umfassend geschätzte Umgebungstemperaturdaten und geschätzte Transportdauerdaten,
c) Bereitstellen von behälterspezifischen Daten, umfassend thermodynamische Kennzahlen,
d) Erstellen wenigstens einer Kombination von Routenabschnitten für wenigstens eine Transportroute vom Startort zum Zielort,
e) Berechnen und Anzeigen eines erwarteten Verlaufs der Innentemperatur des Transportbehälters für die wenigstens eine Kombination von Routenabschnitten aus den routenabschnittsspezifischen geschätzten Daten und den behälterspezifischen Daten, wobei der erwartete Verlauf der Innentemperatur innerhalb eines vordefinierten Temperaturbereichs liegt,
f) Aufzeichnen von routenabschnittsspezifischen tatsächlichen Daten während des Transports, umfassend tatsächliche Umgebungstemperaturdaten und tatsächliche Transportdauerdaten,
g) Aktualisieren, während des Transports, der Berechnung des erwarteten Verlaufs der Innentemperatur des Transportbehälters für einen verbleibenden Teil der Transportroute unter Berücksichtigung der routenabschnittsspezifischen tatsächlichen Daten.

Das erfindungsgemäße Verfahren eignet sich insbesondere für Transportvorgänge, in denen in wenigstens einem der Routenabschnitte, vorzugsweise in allen Routenabschnitten, ein passiver Kühlbehälter verwendet wird, insbesondere ein Transportbehälter mit Latentwärmespeicherelementen.

Dadurch, dass in Schritt a) von Routenabschnitten ausgegangen wird, denen jeweils wenigstens ein Transportmittel zugeordnet werden kann, können im Rahmen der Planung und Überwachung eines Warentransports abschnittsspezifische und transportmittelspezifische Parameter der Transportroute berücksichtigt werden. Unter einem Routenabschnitt ist beispielsweise eine Teilstrecke der Transportroute zu verstehen, in welcher der Transportbehälter mit einem Transportmittel transportiert wird. Es kann sich beispielsweise um einen Lufttransport, einen LKW-Transport oder einen Bahntransport handeln. Ein Routenabschnitt kann aber auch eine Zwischenstation zwischen zwei aufeinanderfolgenden Teilstrecken sein, in denen der Transportbehälter nicht transportiert wird, sondern sich im Transit befindet oder gelagert wird. Dies umfasst beispielsweise den Aufenthalt des Transportbehälters in Kühlhäusern, Lagerhallen und Laderampen. Ein Routenabschnitt kann daher auch einen zeitlichen Abschnitt des Transports darstellen.

In Schritt b) werden den Routenabschnitten routenabschnittsspezifische geschätzte Daten zugeordnet, umfassend geschätzte Umgebungstemperaturdaten und geschätzte Transportdauerdaten. Die Umgebungstemperaturdaten können Temperaturen im Innenbereich, wie z.B. in Kühlhäusern, Lagerhallen, Laderampen, im Frachtraum von Flugzeugen oder im Laderaum eines LKW, oder in Außenbereichen, wie z.B. auf Flugfeldern, Freiluftlagerplätzen oder offenen Ladeflächen, umfassen. Im Fall von Innenbereichen handelt es sich bei den geschätzten Umgebungstemperaturdaten insbesondere um auf Messungen basierende Erfahrungswerte. Im Fall von Außenbereichen werden die geschätzten Umgebungstemperaturdaten insbesondere auf der Grundlage von Wettervorhersagen ermittelt. Gemeinsam mit den geschätzten Transportdauerdaten liegen somit für jeden Routenabschnitt Daten vor, die eine Abschätzung erlauben, wie lange der Transportbehälter welcher Umgebungstemperatur ausgesetzt sein wird.

In Schritt c) werden behälterspezifische Daten bereitgestellt, nämlich thermodynamische Kennzahlen eines oder mehrerer Transportbehälter. Die thermodynamischen Kennzahlen können beispielsweise die Wärmeleitfähigkeit der Isolationsmaterialien, die Isolationsdicke, die Enthalpie und Menge der verwendeten Kühlmittel und dgl. umfassen. Die thermodynamischen Kennzahlen werden derart ausgewählt, dass unter Zugrundelegung des zeitlichen Verlaufs der Umgebungstemperatur eine thermodynamische Berechnung der zeitlichen Änderung der Innentemperatur des Transportbehälters vorgenommen werden kann.

In Schritt d) werden in Abhängigkeit einer Transportanforderung, welche einen Startort und einen Zielort des Transports angibt, wenigstens eine Kombination von Routenabschnitten erstellt, die eine vollständige Transportroute von Startort zum Zielort ergibt. Hierbei können auch mehrere Kombinationen von Routenabschnitten vorgeschlagen werden, von denen eine Kombination für den tatsächlichen Transport ausgewählt werden kann. Die unterschiedlichen Kombinationen können voneinander verschiedene Transportrouten darstellen, d.h. Transportrouten, die über voneinander verschiedene Zwischenstationen vom Startort zum Zielort führen, oder dieselbe Transportroute darstellen, die sich in der Wahl der Transortmittel voneinander unterscheiden.

In Schritt e) wird aus den routenabschnittsspezifischen geschätzten Daten und den behälterspezifischen Daten ein erwarteter Verlauf der Innentemperatur des Transportbehälters für die wenigstens eine Kombination von Routenabschnitten errechnet und angezeigt. Dabei werden für jeden der in der Kombination enthaltenen Routenabschnitte die diesem jeweils zugeordneten geschätzten Umgebungstemperaturdaten und die geschätzten Transportdauerdaten herangezogen und unter Verwendung der behälterspezifischen Daten eine thermodynamische Berechnung des erwarteten Temperaturverlaufs angestellt und die erwarteten Temperaturverläufe der aufeinanderfolgenden Routenabschnitte zu einem Gesamtverlauf der erwarteten Innentemperatur zusammengesetzt. Hierbei können verschiedene Routenabschnittskombinationen durchgerechnet und wenigstens eine Routenabschnittskombination ausgegeben werden, bei welcher der erwartete Verlauf der Innentemperatur innerhalb eines vordefinierten Temperaturbereichs liegt. Wenn mehrere Routenabschnittskombinationen in Frage kommen, bei denen der erwartete Verlauf der Innentemperatur innerhalb eines vordefinierten Temperaturbereichs liegt, kann ein Benutzer eine Auswahl treffen. Jedenfalls liegt am Ende von Schritt e) eine Routenabschnittskombination vor, die für den Transport des Transportbehälters vom Startort zum Zielort verwendet wird.

In die Berechnung verschiedener Routenabschnittskombinationen kann in Schritt e) auch eine zeitliche Komponente als zusätzliche Variable einfließen, insbesondere Variationen der Startzeit und der Ankunftszeit des Transports. Bei der Planung eines Transports kann die gewünschte Ankunftszeit beispielsweise zusammen mit einer akzeptablen Abweichung, z.B. +/- 3 Tage festgelegt werden.

In Schritt f) werden während des Transports die routenabschnittsspezifischen tatsächlichen Daten, nämlich möglichst für jeden Routenabschnitt die tatsächliche Umgebungstemperatur und die tatsächliche Transportdauer, erfasst, dem System zur Verfügung gestellt und aufgezeichnet. Dies erfolgt beispielsweise durch geeignete Temperatursensoren, die am oder im Transportbehälter angebracht sind, oder durch das Abfragen von aktuellen Temperaturdaten eines Wetterdienstes in Kombination mit einem System zur Positionsnachverfolgung des Transportbehälters. Die Erfassung der tatsächlichen Umgebungstemperatur kann hierbei kontinuierlich oder in bestimmten Zeitabständen erfolgen. Insbesondere wird die tatsächliche Umgebungstemperatur in jedem Routenabschnitt zumindest einmal erfasst. Bevorzugt wird die tatsächliche Umgebungstemperatur in Abständen von nicht mehr als 1-2 Minuten erfasst.

Die Positionsnachverfolgung kann mittels eines im oder am Transortbehälter angebrachten Empfängers eines globalen Navigationssatellitensystems erfolgen oder durch Erfassung des Transportbehälters beim Passieren von stationären Kontrollpunkten.

Da die routenabschnittsspezifischen tatsächlichen Daten von den routenabschnittsspezifischen geschätzten Daten abweichen können, sieht die Erfindung nun gemäß Schritt g) vor, dass während des Transports die Berechnung des erwarteten Verlaufs der Innentemperatur des Transportbehälters für einen verbleibenden Teil der Transportroute unter Berücksichtigung der routenabschnittsspezifischen tatsächlichen Daten aktualisiert wird. Diese Aktualisierung kann vorzugsweise mehrmals während des Transportvorgangs vorgenommen werden. Vorzugsweise wird im Rahmen der Aktualisierung der für den bisherigen Teil der Transportroute in Schritt e) errechnete Verlauf der Innentemperatur anhand der routenabschnittsspezifischen tatsächlichen Daten korrigiert und die Endtemperatur des korrigierten Temperaturverlaufs als Ausgangspunkt für die Neuberechnung des erwarteten Verlaufs der Innentemperatur für den verbliebenden Teil der Transportstrecke herangezogen. Die Neuberechnung erfolgt hierbei analog Schritt e) unter Verwendung der für den verbleibenden Teil der Transportstrecke geschätzten Temperaturdaten und den behälterspezifischen Daten.

Die Vorhersage des Innentemperaturverlaufs wird dadurch mit fortschreitender Zeit immer genauer. Insbesondere ist es vorteilhaft, wenn die routenabschnittsspezifischen tatsächlichen Daten und die Positionsdaten des Transportbehälters gleichsam in Echtzeit, d.h. mit einem maximalen Zeitverzug von 1-5 Minuten nach der Messung, vorliegen, sodass eine Echtzeitüberwachung des Transportbehälters und eine prompte Aktualisierung des erwarteten Innentemperaturverlaufs sichergestellt sind. Die Frequenz der Aktualisierungsvorgänge hängt davon ab, wie oft neue routenabschnittsspezifische tatsächliche Daten und Positionsdaten vorliegen. Während eines Flugzeugtransports ist eine Datenübermittlung beispielsweise nicht möglich, während eines Landtransports hingegen können Daten in Abständen von z.B. 5-10 Minuten übermittelt werden.

Der aktualisierte Verlauf der Innentemperatur kann herangezogen werden, um abzuschätzen, ob es während des restlichen Transports zu einer Temperaturüber- oder Unterschreitung kommen kann. Eine bevorzugte Ausführungsform der Erfindung sieht in diesem Zusammenhang vor, dass der erwartete Verlauf der Innentemperatur für den verbleibenden Teil der Transportroute mit dem vordefinierten Temperaturbereich abgeglichen wird und ein erwartetes Verlassen des Temperaturbereichs identifiziert und angezeigt wird. Das erwartete Verlassen des Temperaturbereichs kann beispielsweise in Form einer Warnung auf einem Bildschirm angezeigt werden. Wenn sich der Transportvorgang beispielsweise aufgrund eines ausgefallenen Fluges verzögert und sich dadurch die Wahrscheinlichkeit für eine Temperaturabweichung über einen definierten Grenzwert erhöht, wird eine Warnung ausgegeben und es werden Lösungsmöglichkeiten vorgeschlagen.

Bevorzugt kann derart vorgegangen werden, dass bei einem erwarteten Verlassen des Temperaturbereichs Änderungen des Transports vorgeschlagen werden, z.B. eine Änderung der Transportroute, der Routenabschnitte, des Transportmittels oder der Transportzeit. Es kann auch die Auswahl eines anderen Transsportbehälters vorgeschlagen werden. Für die Generierung eines Vorschlags wird vorzugsweise analog zu Schritt e) vorgegangen, wobei das Durchrechnen von verschiedene Kombinationen von Routenabschnitten und Transportmitteln lediglich für den verbleibenden Teil der Transportroute erfolgt. Insbesondere werden für jeden der in der jeweiligen Kombination enthaltenen Routenabschnitte des verbleibenden Teils der Transportroute die diesem jeweils zugeordneten geschätzten Umgebungstemperaturdaten und die geschätzten Transportdauerdaten herangezogen und unter Verwendung der behälterspezifischen Daten eine thermodynamische Berechnung des erwarteten Temperaturverlaufs angestellt und die erwarteten Temperaturverläufe der aufeinanderfolgenden Routenabschnitte zu einem Gesamtverlauf der erwarteten Innentemperatur zusammengesetzt. Die sich für die einzelnen Routenabschnittskombinationen ergebenden Verläufe werden dahingehend überprüft, ob sie innerhalb eines vordefinierten Temperaturbereichs liegen und die geeigneten Routenabschnittskombinationen werden als Vorschlag für eine geänderte Routenführung herangezogen.

Zusätzlich zur Erfassung der Umgebungstemperatur kann während des Transports auch die tatsächliche Innentemperatur des Transportbehälters gemessen und dem System zur Verfügung gestellt werden. Die tatsächliche, gemessene Innentemperatur kann zur Kontrolle der thermodynamischen Berechnung der erwarteten Innentemperatur aus der tatsächlichen Umgebungstemperatur herangezogen werden. Zu diesem Zweck wird gemäß einer bevorzugten Ausführungsform der Erfindung so vorgegangen, dass während des Transports die Berechnung des erwarteten Verlaufs der Innentemperatur des Transportbehälters für einen bisherigen Teil der Transportroute unter Berücksichtigung der routenabschnittsspezifischen tatsächlichen Daten aktualisiert wird. Weiters wird der aktualisierte, berechnete Verlauf der Innentemperatur für den bisherigen Teil der Transportroute mit dem tatsächlichen Verlauf der Innentemperatur abgeglichen und eine allfällige Abweichung identifiziert, wobei vorzugsweise die Abweichung zur Korrektur der behälterspezifischen Daten herangezogen und Schritt g) unter zusätzlicher Berücksichtigung der korrigierten behälterspezifischen Daten durchgeführt wird. Dies bedeutet, dass aus einer Abweichung der aus der tatsächlichen Umgebungstemperatur und den thermodynamischen Kennzahlen des Transportbehälters errechneten Innentemperatur von der gemessenen Innentemperatur darauf geschlossen wird, dass sich der Transportbehälter z.B. thermisch anders verhält als erwartet, wodurch sich die Wahrscheinlichkeit für ein Verlassen des definierten Temperaturbereichs erhöhen kann. Auf Grund dessen kann eine Warnmeldung ausgegeben werden und es kann ggf. eine automatische oder händische Korrektur der thermodynamischen Kennzahlen des Transportbehälters vorgenommen werden.

Die Entscheidung über eine optimale Kombination von Routenabschnitten, Transportmitteln, Transportzeitpunkten und Transportbehältertyp kann nicht nur von der Einhaltung des vordefinierten Temperaturbereichs der Innentemperatur, sondern auch von zusätzlichen Kriterien abhängen. Insbesondere ist es wünschenswert, wenn in die Auswahl der Transportparameter auch die damit verbundenen Kosten sowie die CO₂-Bilanz einfließen können.

Eine bevorzugte Weiterbildung der Erfindung sieht in diesem Zusammenhang vor, dass die routenabschnittsspezifischen geschätzten Daten weiters eine geschätzte CO₂-Bilanz des Transportmittels umfassen und/oder dass die behälterspezifischen Daten eine CO₂-Bilanz des Transportbehälters umfassen, wobei in Schritt e) aus der geschätzten CO₂-Bilanz der jeweiligen Transportmittel und/oder aus der CO₂-Bilanz des Transportbehälters zusätzlich eine erwartete CO₂-Bilanz für die Kombination von Routenabschnitten errechnet wird. Für die Ermittlung der CO₂-Bilanz kann hierbei die gesamte Lebensspanne des Transportbehälters von der Herstellung bis zu Entsorgung berücksichtigt wird.

Alternativ oder zusätzlich kann vorgesehen sein, dass die routenabschnittsspezifischen geschätzten Daten weiters geschätzte Kosten des Transportmittels umfassen und/oder dass die behälterspezifischen Daten Kosten des Transportbehälters umfassen, wobei in Schritt e) aus den geschätzten Kosten der jeweiligen Transportmittel und/oder aus den Kosten des Transportbehälters zusätzlich erwartete Kosten für die Kombination von Routenabschnitten errechnet werden. Die Koten können hierbei Lufttransportkosten pro Volumen und Gewicht sowie Miet- oder Beschaffungskosten des Transportbehälters umfassen.

Die Planung des Transportvorgangs kann weiter verbessert werden, wenn bei der Optimierung des Transports unterschiedliche Transportbehältertypen berücksichtigt werden können. Eine bevorzugte Ausbildung der Erfindung sieht hierbei vor, dass die behälterspezifischen Daten thermodynamische Kennzahlen und ggf. die CO₂-Bilanz und ggf. die Kosten einer Mehrzahl unterschiedlicher Behältertypen umfassen und dass in Schritt e) erwartete Verläufe der Innentemperatur und ggf. erwartete CO₂-Bilanzen und ggf. erwartete Kosten für jeden der Mehrzahl von Behältertypen errechnet werden und einer der Behältertypen für den Transport ausgewählt wird. Mögliche Behältertypen sind beispielsweise Einwegkühlbehälter aus Pappe und Styropor, Thermodecken (Thermal Blankets), Mehrwegkühlbehälter unterschiedlicher Größenordnungen und unterschiedlicher Ausstattungen mit Kühlmedien.

Als Eingangsparameter für die Berechnung des erwarteten Temperaturverlaufs der Innentemperatur werden wie bereits erwähnt Schätzungen für routenabschnittsspezifische Daten, umfassend geschätzte Umgebungstemperaturdaten und geschätzte Transportdauerdaten, sowie behälterspezifischen Daten, umfassend thermodynamische Kennzahlen, verwendet. Die Vorhersagequalität des Innentemperaturverlaufs hängt daher von der Genauigkeit der Schätzung der Eingangsparameter ab.

Um bei der Berechnung des erwarteten Temperaturverlaufs berücksichtigen zu können, dass die Schätzung der Eingangsparameter mit einer gewissen Unsicherheit behaftet ist, wird gemäß einer bevorzugten Ausführungsform derart vorgegangen, dass die geschätzten Umgebungstemperaturdaten und die geschätzten Transportdauerdaten jeweils in Form eines geschätzten Temperaturbereichs bzw. eines geschätzten Zeitdauerbereichs vorliegen. Zusätzlich können auch die übrigen Eingangsparameter, nämlich die behälterspezifischen Daten, die CO₂-Bilanz der Transportbehälter und/oder der Transportmittel und die Kosten der Transportbehälter und/oder der Transportmittel in Form von Bereichsangaben vorliegen.

Der erwartete Verlauf der Innentemperatur ergibt sich dabei vorzugsweise dadurch, dass in Schritt e) für die wenigstens eine Kombination von Routenabschnitten, vorzugsweise für jede der Mehrzahl von Kombinationen von Routenabschnitten, durch Variation der geschätzten Temperaturdaten innerhalb des Temperaturbereichs und durch Variation der geschätzten Transportdauer innerhalb des Zeitdauerbereichs eine Streuung des erwarteten Verlaufs der Innentemperatur und ggf. der erwarteten CO₂-Bilanz und ggf. der erwarteten Kosten für die wenigstens eine Kombination, vorzugsweise für jede der Mehrzahl von Kombinationen von Routenabschnitten, errechnet wird.

Eine weitere Verbesserung kann erreicht werden, wenn hinsichtlich der Eingangsparameter nicht nur deren Mittelwerte oder Maximalwerte, sondern auch deren Varianz berücksichtigt werden kann. In diesem Zusammenhang ist bevorzugt vorgesehen, dass die geschätzten Umgebungstemperaturdaten und die geschätzten Transportdauerdaten jeweils in Form einer Wahrscheinlichkeitsverteilung der Temperatur bzw. der Transportdauer vorliegen. Die Wahrscheinlichkeitsverteilung kann beispielsweise in Form einer Dichtefunktion bereitgestellt werden. Zusätzlich können auch die übrigen Eingangsparameter, nämlich die behälterspezifischen Daten, die CO₂-Bilanz der Transportbehälter und/oder der Transportmittel und die Kosten der Transportbehälter und/oder der Transportmittel in Form einer Wahrscheinlichkeitsverteilung vorliegen.

Die Eingangsparameter werden hierbei bevorzugt derart verarbeitet, dass auch die Ausgangsparameter in Form einer Wahrscheinlichkeitsverteilung ausgegeben werden. Bevorzugt wird zu diesem Zweck so vorgegangen, dass in Schritt e) für die wenigstens eine Kombination von Routenabschnitten, vorzugsweise für jede der Mehrzahl von Kombinationen von Routenabschnitten, aus den Wahrscheinlichkeitsverteilungen der Temperatur und der Transportdauer eine Wahrscheinlichkeitsverteilung des erwarteten Verlaufs der Innentemperatur und ggf. der erwarteten CO₂-Bilanz und ggf. der erwarteten Kosten für die wenigstens eine Kombination, vorzugsweise für jede der Mehrzahl von Kombinationen von Routenabschnitten, errechnet wird.

Die Wahrscheinlichkeitsverteilung ist beispielsweise durch einen Mittelwert und eine Streuung, d.h. eine Verteilung von einzelnen Werten um den Mittelwert, gekennzeichnet. Insbesondere kann die Wahrscheinlichkeitsverteilung in Form einer Normalverteilung vorliegen.

Um nun erkennen zu können, ob z.B. eine erhaltene Verteilung des erwarteten Innentemperaturverlaufs ein Verlassen des vordefinierten Temperaturbereichs für wahrscheinlich erscheinen lässt oder nicht, kann ein bestimmtes Streuintervall der Normalverteilung herangezogen und überprüft werden, ob die Grenzen des Streuintervalls sich aus dem vordefinierten Temperaturbereich hinausbewegen.

Insbesondere kann das Streuintervall einem vordefinierten Vielfachen der Standardabweichung der Wahrscheinlichkeitsverteilung entsprechen.

Gemäß einem weiteren Aspekt der vorliegenden Erfindung wird ein System zur Datenverarbeitung bereitgestellt, umfassend Mittel zur Ausführung des erfindungsgemäßen Verfahrens. Das Datenverarbeitungssystem kann von einer handelsüblichen Datenverarbeitungseinrichtung gebildet sein, wobei vorzugsweise eine zentrale Computereinheit vorgesehen ist, welcher alle für die Durchführung des erfindungsgemäßen Verfahrens erforderlichen Daten zugeführt sind, insbesondere:
- den Startort und den Zielort darstellende Daten
- die Routenabschnitte darstellende Daten
- die Transportmittel darstellende Daten
- die Transportbehälter(typen) darstellende Daten
- routenabschnittsspezifische geschätzte Daten, umfassend geschätzte Umgebungstemperaturdaten und geschätzte Transportdauerdaten
- behälterspezifische Daten, umfassend thermodynamische Kennzahlen
- ggf. geschätzte CO₂-Bilanzen der Transportmittel und der Transportbehälter
- ggf. geschätzte Kosten der Transportmittel und der Transportbehälter
- Positionsdaten des Transportbehälters
- während des Transports gemessene routenabschnittsspezifische tatsächliche Daten umfassend tatsächliche Umgebungstemperaturdaten und tatsächliche Transportdauerdaten,
- ggf. der tatsächliche Verlauf der Behälterinnentemperatur.

Das System zur Datenverarbeitung kann weiters mit einer Eingabeeinheit zum Eingeben von Daten und/oder Steuerbefehlen und mit einer Ausgabeeinheit, wie z.B. einem Bildschirm zusammenwirken.

Gemäß einem weiteren Aspekt der vorliegenden Erfindung wird ein Computerprogrammprodukt bereitgestellt, umfassend Befehle, die bei der Ausführung des Programms durch einen Computer diesen veranlassen, das erfindungsgemäße Verfahren auszuführen.

Die Erfindung wird nachfolgend anhand von in der Zeichnung dargestellten Ausführungsbeispielen näher erläutert. In dieser zeigen
Fig. 1 ein Flussdiagramm eines Transportplanungssystems,
Fig. 2 ein Beispiel für die Berechnung des Temperaturverlaufs im Transportbehälter,
Fig. 3 eine Berechnung der Wahrscheinlichkeit einer Temperaturabweichung aus der Temperatur im Transportbehälter und
Fig. 4 ein Flussdiagramm für ein Echtzeitüberwachungssystem.

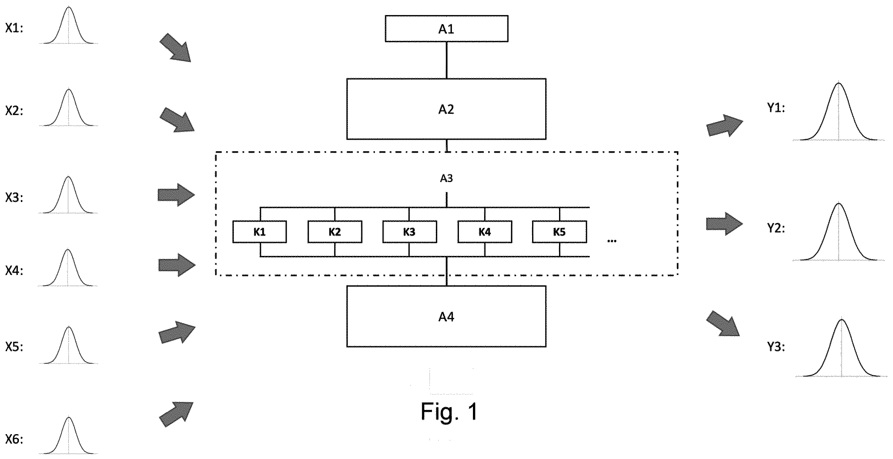

In Fig. 1 ist eine Mehrzahl von Eingangsparametern X1, X2, ... X6 dargestellt, die dem erfindungsgemäßen Verfahren zugeführt werden, welches daraus Ausgangsparameter Y1, Y2 und Y3 errechnet.

X1 stellt statistische Umgebungstemperaturdaten in Innenbereichen für Routenabschnitte entlang der Transportroute dar, die auf in der Vergangenheit durchgeführten Messungen beruhen, z.B. auf geschlossenen, gekühlten LKW- und Flugzeugladeflächen, in Kühlhäusern, in Lagerhallen und auf Laderampen.

X2 stellt statistische Umgebungstemperaturdaten in Außenbereichen für Routenabschnitte entlang der Transportroute dar, die entweder auf in der Vergangenheit durchgeführten Messungen oder auf Prognosedaten einer Wettervorhersage beruhen, z.B. auf Flugfeldern, Freiluftlagerplätzen und Ladeflächen von nicht temperaturkontrollierten LKWs.

X3 stellt statistische Daten betreffend die Transportdauer in den einzelnen Routenabschnitte dar.

X4 stellt thermodynamische Kennzahlen unterschiedlicher Transportbehälter dar, wobei die herstellungsbedingte Varianz berücksichtigt wird, z.B. Wärmeleitfähigkeiten der Isolationsmaterialien, Isolationsdicken, Enthalpie und Menge der verwendeten Kühlmittel.

X5 stellt statistische Daten zur CO₂-Bilanzen von unterschiedlichen Transportmitteln und Transportbehältern dar, wobei die gesamte Lebensspanne von Herstellung bis Entsorgung der Kühlbehälter berücksichtigt wird.

X6 stellt statistische Daten zu den Kosten der Transportmittel und Transportbehälter dar, z.B. Lufttransportkosten pro Volumen und Gewicht, Miet- oder Beschaffungskosten der Transportbehälter.

Im hier dargestellten Beispiel liegen die Eingangsparameter X1, X2, ... X6 in Form einer Wahrscheinlichkeitsverteilung vor.

Mit diesen Eingangsparameter wird nun ein Transport von temperaturempfindlichen Waren mit dem Ziel geplant und überwacht, dass ein vordefinierter Temperaturbereich im Innenraum des Transportbehälters nicht verlassen werden soll. Im ersten Schritt A1 erfolgt die Definition des Start- und Zielorts sowie der gewünschten Ankunftszeit. Im Schritt A2 werden unter Verwendung der Eingangsparameter X1, X2, ... X6 zahlreiche Kombinationen von Routenabschnitten, Transportmitteln und Transportbehältertypen ermittelt.

In Schritt A3 werden mittels probabilistischer Methoden für jede Kombination (K1, K2, K3, K4, K5 ...) durch Variation der Eingangsparameter die Ausgangsparameter Y1, Y2 und Y3 in Form einer Wahrscheinlichkeitsverteilung errechnet. Hierbei stellt Y1 die Wahrscheinlichkeitsverteilung der Innentemperatur des Transportbehälters dar, Y2 die Wahrscheinlichkeitsverteilung der CO₂-Gesmatbilanz des Transportvorgangs und Y3 die Wahrscheinlichkeitsverteilung der Gesamtkosten des Transportvorgangs.

Im Schritt A4 erfolgt ein Vergleich der einzelnen Kombinationen hinsichtlich der jeweiligen Ausgangsparameter Y1, Y2 und Y3 und es wird die beste Kombination ermittelt und für die Durchführung des Transportvorgangs ausgewählt. Die Auswahl der besten Kombination kann im Hinblick auf eine gleichzeitige Optimierung aller drei Ausgangsparameter erfolgen, wobei einem oder zwei Ausgangsparametern im Rahmen der Optimierung eine höhere Gewichtung zugeordnet werden kann als dem anderen Ausgangsparameter.

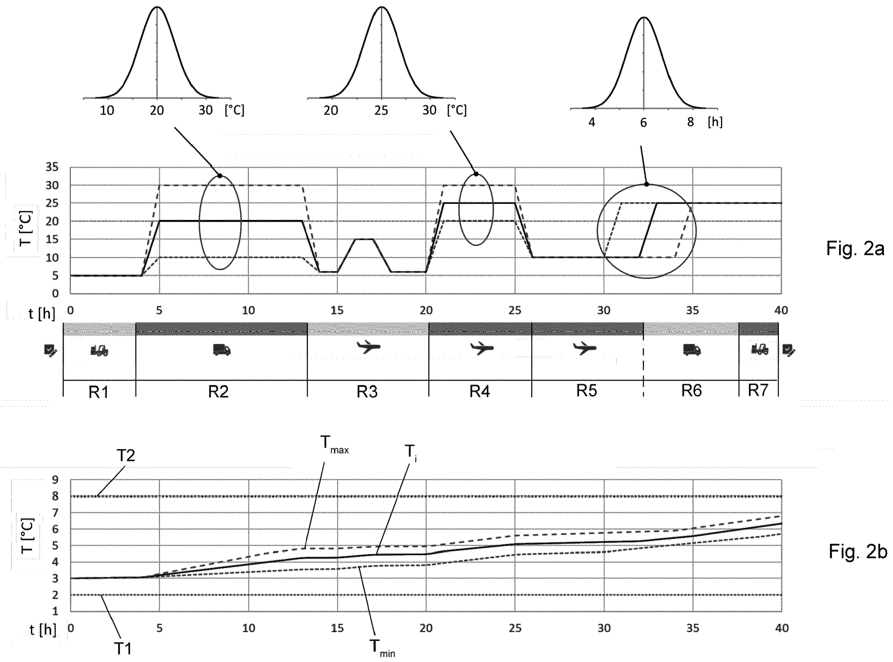

Fig. 2a und 2b zeigen die Berechnung des Ausgangsparameters Y1, d.h. des Verlaufs der Innentemperatur des Transportbehälters anhand eines konkreten Beispiels für eine Transportroute, die aus mehreren Routenabschnitten besteht.

Fig. 2a zeigt geschätzte Umgebungstemperaturdaten (T [°C]) und geschätzte Transportdauerdaten (t [h/Stunden]) für die einzelnen Routenabschnitte. Im ersten Routenabschnitt R1 lagert der Transportbehälter in einem Kühlhaus und wird dann mit einem Gabelstapler für den nachfolgenden LKW-Transport vorbereitet. Dem Routenabschnitt R1 ist eine geschätzte Umgebungstemperatur von 5°C zugeordnet, wobei dieser Wert keine Varianz aufweist, weil es sich um ein temperaturkontrolliertes Kühlhaus handelt. Im zweiten Routenabschnitt R2 wird der Transportbehälter in einem nicht temperaturkontrollierten LKW transportiert, wobei die geschätzte Umgebungstemperatur 20°C mit einer Varianz von ± 10°C beträgt. Im Routenabschnitt R3 befindet sich der Transportbehälter in einem temperaturkontrollierten Zwischenlager am Flughafen, wobei die geschätzte Umgebungstemperatur mit 15°C angegeben ist. Im Routenabschnitt R4 wird der Transportbehälter am Flugfeld zwischengelagert, bevor er in den Frachtraum des Flugzeugs verladen wird. Hier beruht die geschätzte Umgebungstemperatur auf Prognosedaten eines Wettervorhersagedienstes und beträgt 25 ± 5°C. Im Routenabschnitt R5 wird der Transportbehälter im Frachtraum eines Flugzeugs transportiert, wo die geschätzte Umgebungstemperatur 10°C beträgt. Die Transportdauer ist mit einer Unsicherheit behaftet und weist eine Varianz von ±2 Stunden auf. Im Routenabschnitt R6 wird der Transportbehälter in einem temperaturkontrollierten LKW weitertransportiert und schließlich im Routenabschnitt R7 mit einem Gabelstapler an seinen Zielort gebracht, wobei die jeweils geschätzte Umgebungstemperatur 25°C beträgt.

In den Fällen, in denen die geschätzte Umgebungstemperatur und die geschätzte Transportdauer eine Varianz aufweisen, kann dies, wie in Fig. 2a graphisch dargestellt, in Form einer Wahrscheinlichkeitsverteilung eingegeben werden.

In Fig. 2b ist das Ergebnis der Berechnung des erwarteten Verlaufs der Innentemperatur Tᵢ des Transportbehälters dargestellt, wobei die Berechnung auf Grundlage der in Fig. 2a dargestellten geschätzten Umgebungstemperatur und geschätzten Transportdauer jedes Routenabschnitts sowie der thermodynamischen Kennzahlen des Transportbehälters erfolgt. Bei der Berechnung wird die Varianz bzw. Wahrscheinlichkeitsverteilung der Eingangsparameter berücksichtigt, sodass der erwartete Verlauf der Innentemperatur ebenfalls eine entsprechende Varianz aufweist, wie dies in Fig. 2 mit den strichlierten Linien Tₘₐₓ und Tₘᵢₙ dargestellt ist. Der vordefinierte Temperaturbereich, welcher während des Transports nicht verlassen werden kann, ist in Fig. 2b durch die untere Temperaturgrenze T1 und die obere Temperaturgrenze T2 definiert. Es wird davon ausgegangen, dass der vordefinierte Temperaturbereich T1-T2 verlassen wird, wenn Tₘᵢₙ die untere Temperaturgrenze T1 unterschreitet oder Tₘₐₓ die obere Temperaturgrenze T2 überschreitet.

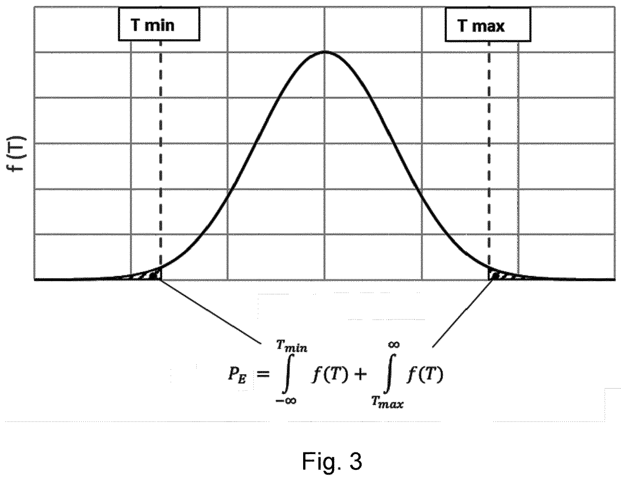

Die erwartete Innentemperatur kann auch in Form einer Wahrscheinlichkeitsverteilung ausgegeben werden, wie dies in Fig. 3 dargestellt ist. Tₘₐₓ und Tₘᵢₙ werden hierbei als vordefiniertes Vielfaches der Standardabweichung der Normalverteilungsfunktion definiert, wobei sich die Wahrscheinlichkeit eines Verlassens des vordefinierten Temperaturbereichs T1-T2 mit der in Fig. 3 angegebenen Formel berechnet lässt.

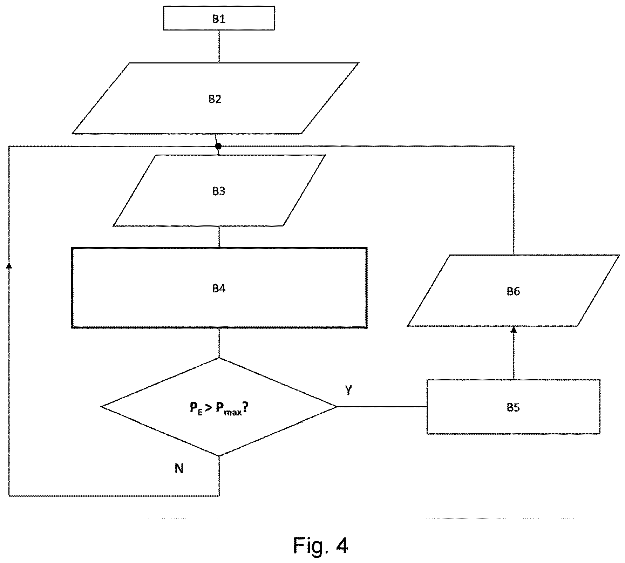

Mit der Erfindung lässt sich eine Echtzeitüberwachung des Transportvorgangs vornehmen, wie dies in Fig. 4 dargestellt ist. In Schritt B1 werden Start- und Zielort sowie gewünschten Ankunftszeit definiert, was Schritt A1 von Fig. 1 entspricht. In Schritt B2 wird die optimale Kombination aus Routenabschnitten, Transportmittel und Transportbehältertyp ausgewählt und eingelesen, was Schritt A4 von Fig. 1 entspricht. Nun wird in Schritt B3 werden während des Transports die Eingangsparameter X1, X2 und X3 in Echtzeit eingelesen, sodass der erwartete Temperaturverlauf für den verbleibenden Teil der Transportroute aktualisiert werden und in Schritt B4 daraus die Wahrscheinlichkeit eines Verlassens des vordefinierten Temperaturbereichs errechnet werden kann. Wenn die Wahrscheinlichkeit P_{E} eines Verlassens des vordefinierten Temperaturbereichs größer ist als eine vordefinierte Obergrenze Pₘₐₓ ("N"), folgt in Schritt B5 die Ausgabe einer Warnung in die Angabe von Lösungsvorschlägen. In schritt B6 wählt der Benutzer eine der Lösungsmöglichkeiten aus. Danach kehrt das System zu Schritt B3 zurück und die Echtzeitüberwachung des Transportvorgangs wird mit der geänderten Konfiguration fortgesetzt. Wenn die Wahrscheinlichkeit P_{E} eines Verlassens des vordefinierten Temperaturbereichs kleiner ist als eine vordefinierte Obergrenze Pₘₐₓ ("N"), wird die Echtzeitüberwachung des Transportvorgangs ebenfalls fortgesetzt.

## Patentansprüche

1. Computerimplementiertes Verfahren zur Planung und Überwachung einer Kühlkette beim Transport von temperaturempfindlichen Waren in einem temperaturkontrollierten Transportbehälter von einem Startort zu einem Zielort, umfassend
a) Bereitstellen von Routenabschnitten wenigstens einer Transportroute, wobei den Routenabschnitten jeweils wenigstens ein Transportmittel zugeordnet ist,
b) Bereitstellen von routenabschnittsspezifischen geschätzten Daten, umfassend geschätzte Umgebungstemperaturdaten und geschätzte Transportdauerdaten,
c) Bereitstellen von behälterspezifischen Daten, umfassend thermodynamische Kennzahlen,
d) Erstellen wenigstens einer Kombination von Routenabschnitten für wenigstens eine Transportroute vom Startort zum Zielort,
e) Berechnen und Anzeigen eines erwarteten Verlaufs der Innentemperatur des Transportbehälters für die wenigstens eine Kombination von Routenabschnitten aus den routenabschnittsspezifischen geschätzten Daten und den behälterspezifischen Daten, wobei der erwartete Verlauf der Innentemperatur innerhalb eines vordefinierten Temperaturbereichs liegt,
f) Aufzeichnen von routenabschnittsspezifischen tatsächlichen Daten während des Transports, umfassend tatsächliche Umgebungstemperaturdaten und tatsächliche Transportdauerdaten,
g) Aktualisieren, während des Transports, der Berechnung des erwarteten Verlaufs der Innentemperatur des Transportbehälters für einen verbleibenden Teil der Transportroute unter Berücksichtigung der routenabschnittsspezifischen tatsächlichen Daten.

2. Verfahren nach Anspruch 1, **gekennzeichnet durch** den Schritt des Abgleichens des erwarteten Verlaufs der Innentemperatur für den verbleibenden Teils der Transportroute mit dem vordefinierten Temperaturbereich und des Identifizierens und Anzeigens eines erwarteten Verlassens des Temperaturbereichs.

3. Verfahren nach Anspruch 2, **dadurch gekennzeichnet, dass** bei einem erwarteten Verlassen des Temperaturbereichs Änderungen des Transports vorgeschlagen werden, z.B. eine Änderung der Transportroute, der Routenabschnitte, des Transportmittels oder der Transportzeit.

4. Verfahren nach Anspruch 1, 2 oder 3, **gekennzeichnet durch** den Schritt des Aktualisierens, während des Transports, der Berechnung des erwarteten Verlaufs der Innentemperatur des Transportbehälters für einen bisherigen Teil der Transportroute unter Berücksichtigung der routenabschnittsspezifischen tatsächlichen Daten.

5. Verfahren nach einem der Ansprüche 1 bis 4, **gekennzeichnet durch** den Schritt des Messens, während des Transports, des tatsächlichen Verlaufs der Innentemperatur des Transportbehälters und des Abgleichens des aktualisierten, berechneten Verlaufs der Innentemperatur für den bisherigen Teil der Transportroute mit dem tatsächlichen Verlauf und Identifizieren einer Abweichung, wobei vorzugsweise die Abweichung zur Korrektur der behälterspezifischen Daten herangezogen und Schritt g) unter zusätzlicher Berücksichtigung der korrigierten behälterspezifischen Daten durchgeführt wird.

6. Verfahren nach einem der Ansprüche 1 bis 5, **dadurch gekennzeichnet, dass** die routenabschnittsspezifischen geschätzten Daten weiters eine geschätzte CO₂-Bilanz des Transportmittels umfassen und/oder dass die behälterspezifischen Daten eine CO₂-Bilanz des Transportbehälters umfassen, wobei in Schritt e) aus der geschätzten CO₂-Bilanz der jeweiligen Transportmittel und/oder aus der CO₂-Bilanz des Transportbehälters zusätzlich eine erwartete CO₂-Bilanz für die Kombination von Routenabschnitten errechnet wird.

7. Verfahren nach einem der Ansprüche 1 bis 6, **dadurch gekennzeichnet, dass** die routenabschnittsspezifischen geschätzten Daten weiters geschätzte Kosten des Transportmittels umfassen und/oder dass die behälterspezifischen Daten Kosten des Transportbehälters umfassen, wobei in Schritt e) aus den geschätzten Kosten der jeweiligen Transportmittel und/oder aus den Kosten des Transportbehälters zusätzlich erwartete Kosten für die Kombination von Routenabschnitten errechnet werden.

8. Verfahren nach einem der Ansprüche 1 bis 7, **dadurch gekennzeichnet, dass** die behälterspezifischen Daten thermodynamische Kennzahlen und ggf. die CO₂-Bilanz und ggf. die Kosten einer Mehrzahl unterschiedlicher Behältertypen umfassen und dass in Schritt e) erwartete Verläufe der Innentemperatur und ggf. erwartete CO₂-Bilanzen und ggf. erwartete Kosten für jeden der Mehrzahl von Behältertypen errechnet werden und einer der Behältertypen für den Transport ausgewählt wird.

9. Verfahren nach einem der Ansprüche 1 bis 8, **dadurch gekennzeichnet, dass** in Schritt d) mehrere Kombinationen von Routenabschnitten für die wenigstens eine Transportroute vom Startort zum Zielort erstellt werden und dass in Schritt e) der erwartete Verlauf der Innentemperatur und ggf. die erwartete CO₂-Bilanz und ggf. die erwarteten Kosten für jede der Mehrzahl von Kombinationen von Routenabschnitten errechnet werden und eine der Kombinationen für den Transport ausgewählt wird.

10. Verfahren nach einem der Ansprüche 1 bis 9, **dadurch gekennzeichnet, dass** die geschätzten Umgebungstemperaturdaten und die geschätzten Transportdauerdaten jeweils in Form eines geschätzten Temperaturbereichs bzw. eines geschätzten Zeitdauerbereichs vorliegen, wobei ggf. auch die behälterspezifischen Daten, die CO₂-Bilanz der Transportbehälter und/oder der Transportmittel und die Kosten der Transportbehälter und/oder der Transportmittel in Form von geschätzten Bereichen vorliegen.

11. Verfahren nach Anspruch 10, **dadurch gekennzeichnet, dass** in Schritt e) für die wenigstens eine Kombination von Routenabschnitten, vorzugsweise für jede der Mehrzahl von Kombinationen von Routenabschnitten, durch Variation der geschätzten Temperaturdaten innerhalb des Temperaturbereichs und durch Variation der geschätzten Transportdauer innerhalb des Zeitdauerbereichs eine Streuung des erwarteten Verlaufs der Innentemperatur und ggf. der erwarteten CO₂-Bilanz und ggf. der erwarteten Kosten für die wenigstens eine Kombination, vorzugsweise für jede der Mehrzahl von Kombinationen von Routenabschnitten, errechnet wird.

12. Verfahren nach einem der Ansprüche 1 bis 11, **dadurch gekennzeichnet, dass** die geschätzten Umgebungstemperaturdaten und die geschätzten Transportdauerdaten jeweils in Form einer Wahrscheinlichkeitsverteilung der Temperatur bzw. der Transportdauer vorliegen, wobei ggf. auch die behälterspezifischen Daten, die CO₂-Bilanz der Transportbehälter und/oder der Transportmittel und die Kosten der Transportbehälter und/oder der Transportmittel in Form einer Wahrscheinlichkeitsverteilung vorliegen

13. Verfahren nach Anspruch 12, **dadurch gekennzeichnet, dass** in Schritt e) für die wenigstens eine Kombination von Routenabschnitten, vorzugsweise für jede der Mehrzahl von Kombinationen von Routenabschnitten, aus den Wahrscheinlichkeitsverteilungen der Temperatur und der Transportdauer eine Wahrscheinlichkeitsverteilung des erwarteten Verlaufs der Innentemperatur und ggf. der erwarteten CO₂-Bilanz und ggf. der erwarteten Kosten für die wenigstens eine Kombination, vorzugsweise für jede der Mehrzahl von Kombinationen von Routenabschnitten, errechnet wird.

14. System zur Datenverarbeitung, umfassend Mittel zur Ausführung des Verfahrens nach einem der Ansprüche 1 bis 13.

15. Computerprogrammprodukt, umfassend Befehle, die bei der Ausführung des Programms durch einen Computer diesen veranlassen, das Verfahren nach einem der Ansprüche 1 bis 13 auszuführen.
